# EUROPEAN PATENT APPLICATION

(11) **EP 0 750 872 A1**
(43) Date of publication of application: **02.01.1997**
(21) Application number: 96610026.5
(22) Date of filing: 19.06.1996
(51) Int. Cl.: A47J 31/00

(54) **A method of making tea as well as an apparatus for carrying out said method**

(30) Priority: 29.06.1995 DK 758/95
(71) Applicant: WITTENBORG A/S, DK-5000 Odense C (DK)
(72) Inventor: Frank, John, 5250 Odense SV (DK)
(74) Representative: Thierry-Carstensen, Ole Jean

(57) **Abstract**

A method of making tea in an apparatus comprising a substan- tially axially symmetrical cup-shaped brewing chamber (1), which is connected to an actuating means (3) causing it to rotate, and which comprises side walls (8, 13) extending obliquely upwards and away from the axis of symmetry, as well as a straining means (11). This method implies that the brewing chamber (1) is supplied with tea leaves and water while it is stopped. The water is fed in such a direction that it whirls up the tea leaves and causes them to follow a rotating movement about the axis of symmetry. The brewed tea is then allowed to ooze downwards through the straining means (11) accommodated at the bottom of the brewing chamber (1) as the water with the tea leaves calms down. Then the tea leaves are removed from the brewing cham- ber (1) by said chamber being caused to rotate.

## Description

The invention relates to a method of making tea in an apparatus with a substantially axially symmetrical, cup-shaped brewing chamber which is connected to an actuating means causing it to rotate and which comprises side walls extending obliquely upwards and away from the axis of symmetry, as well as a straining means.

It is known to make especially coffee in an axially symmetrical, cup-shaped brewing chamber, in which hot water is forced through the coffee grounds while the brewing chamber is subjected to a rotation, the sides of the cup being shaped as a strainer allowing the brewed coffee to pass and retaining the coffee grounds. Tea made in the same manner does not present the desired quality, which is especially due to the fact that the tea is not allowed to infuse sufficiently. In addition, the known apparatuses are relatively complicated because they require that it is possible to close the brewing chamber during the brewing and to open said chamber when the tea leaves are discharged after the brewing.

The object of the present invention is to provide a method, where the resulting brewed tea presents a relatively good quality.

This object is accomplished by the brewing chamber being supplied with tea leaves and water while it is stopped, said water being fed in such a direction that it whirls up the tea leaves and causes them to follow its rotating movement of said water about the axis of symmetry, and by the brewed tea then being allowed to ooze downwards through the straining means accommodated at the bottom of the brewing chamber as the water with the tea leaves calms down, and where the tea leaves are then removed from the brewing chamber by said brewing chamber being caused to rotate. The feeding of the water in such a manner that the tea leaves follow the rotating movement about the axis of symmetry has the effect that the ready-brewed tea does not immediately flow out through the straining means in the bottom but remains in the interior of the brewing chamber until the rotating movement has ceased substantially. Then the ready-brewed tea easily flows out through the straining means in the bottom of the brewing chamber by virtue of the gravity. The used tea leaves are then easily and efficiently removed from the interior of the brewing chamber by said brewing chamber being caused to rotate vigorously in such a manner that the tea leaves are forced over the upper edge of the brewing chamber so as to be drained off. As a result, the brewing chamber is immediately ready for the brewing of another cup of tea.

According to the invention the removal of the tea leaves is particularly efficiently performed by additional water being fed to the brewing chamber during said removal of the tea leaves. A feeding of hot water during the rotation of the brewing chamber implies that the hot water rinses out the straining means of tea leaves without said water being allowed to penetrate through said straining means, as the water evaporates quickly or is carried upwards along the inclining sides of the brewing chamber.

The infusion time of the tea inside the brewing chamber is according to the invention particularly advantageously adjusted by the inclination of the sides walls being changed at least over a portion thereof.

The invention relates furthermore to an apparatus for carrying out the method, said apparatus comprising a substantially axially symmetrical brewing chamber which is connected to an actuating means for causing said brewing chamber to rotate, where the brewing chamber comprises a straining means and inner side walls extending obliquely upwards and away from the axis of symmetry. This apparatus is according to the invention characterised in that the straining means is substantially plane and arranged perpendicular to the axis of symmetry, and that the apparatus comprises a water feeding device with an outlet arranged such that the water when fed to the brewing chamber is caused to rotate about the axis of symmetry.

In this manner a particularly simple apparatus for carrying out the method is obtained.

According to the invention the straining means may be shaped as a loose disk releasably retained in the bottom of the brewing chamber by means of a removable holding ring, which extends along the circumference of the straining means and is provided with a surface forming part of the inner side walls. As a result, it is possible both to quickly replace the straining means and to adjust the infusion time of the tea because the surface on the holding ring forming part of the inner side walls may be shaped and dimensioned such that in response to the type of tea in question said shape and dimensions of the inner walls increase or decrease the speed at which the tea flows out through the straining means. The resulting infusion time of the tea can thus be adjusted.

According to the invention the inner walls of the brewing chamber may be provided with a plurality of axially upwardly projecting wiper blades which co-operate with the inner side of a covering lid so as to force used tea leaves forwards towards a discharge opening in said lid while the brewing chamber is rotating. As a result, the tea leaves are efficiently removed from the apparatus.

According to the invention it is particularly advantageous that the front side of the wiper blades when seen in the rotating direction of the brewing chamber comprises two adjacent surface parts facing forwards in the rotating direction, where one surface part extends from the outermost edge of the wiper blade and substantially along a plane forming an acute angle of from approximately 10 to approximately 30° relative to an axial plane, which is tangent to the brewing chamber at the outermost edge of said wiper blade, and where the second surface part extends substantially perpendicular to said plane which is tangent to the brewing chamber at the outermost edge of the wiper blade, both surface parts extending parallel to the axis of the brewing chamber. In this manner the tea leaves are efficiently collected in front of the wiper blades close to the outermost edges thereof and pressed out efficiently therefrom through the outlet opening in the lid. Such an embodiment of the wiper blades ensures furthermore a relatively low noise level in use.

Furthermore according to the invention, the outermost surface part of the wiper blades are advantageously convex.

Finally, according to the invention the lid may comprise a circumferential surface inclining downwards towards the bottom of the brewing chamber, said surface being provided in the area radially inside the wiper blades on the side walls of the brewing chamber. In this manner it is avoided that water is expelled through the opening in the lid while the tea leaves are being removed.

The invention is explained in greater detail below with reference to the accompanying drawing, in which
Figure 1 is a side view of an apparatus according to the invention, a part of said view being an axially sectional view for the sake of clarity,
Figure 2 is a perspective view of the brewing chamber of Figure 1 shown together with a tube for the feeding of hot water to the apparatus, and
Figure 3 is a top view of the brewing chamber.

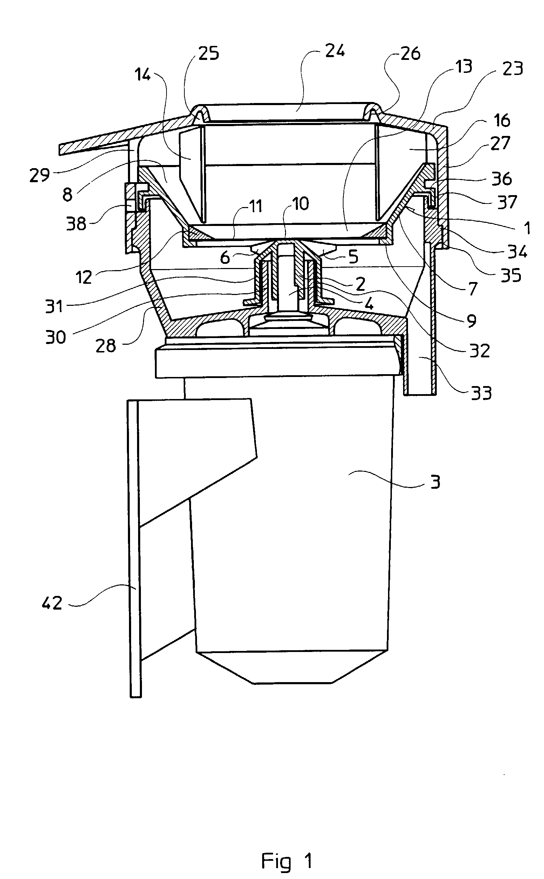

The apparatus of Figure 1 comprises an axially symmetrical cup--shaped brewing chamber designated the general reference numeral 1. This brewing chamber comprises a hub 2 to be secured to the output shaft 4 of a motor 3. A number, preferably five radial fingers 5, 6 extend from the hub 2, said fingers at their outer ends carrying a substantially axially symmetrical side wall 7. On the inner side this side wall 7 comprises a smooth conical surface 8 presenting the smallest diameter adjacent the fingers 5. 6. Adjacent the fingers 5, 6 the side wall 7 is of a substantially L-shaped cross section, where one branch 9 of the L extends radially inwards towards the axis of rotation of the brewing chamber 1. On the side facing the interior of the brewing chamber 1, this branch 9 of the L follows a plane course extending into a plane coinciding with a radial surface 10 on the end of the hub 2 carrying the fingers 5. 6. A plane strainer 11 in form of a stainless steel mesh with holes is arranged on top of the branch 9 and the radial surface 10, which accordingly is centrally arranged inside the brewing chamber 1, said holes being of an inner diameter adapted to the type of tea in question. The wires of the wire mesh can for instance be interspaced 63 µm and define square holes through the wire mesh. The strainer 11 is kept in position by means of a removable ring 12, which by an interference fit mates the adjacent portions of the brewing chamber 1.

On the inner side, the ring 12 comprises an oblique surface 13 forming part of the inner surface 8 of the brewing chamber 1. In response to the type of tea in question, the inner surface 13 of the ring can present a conicity or general inclination differing from the conicity of the other part of the surface 8.

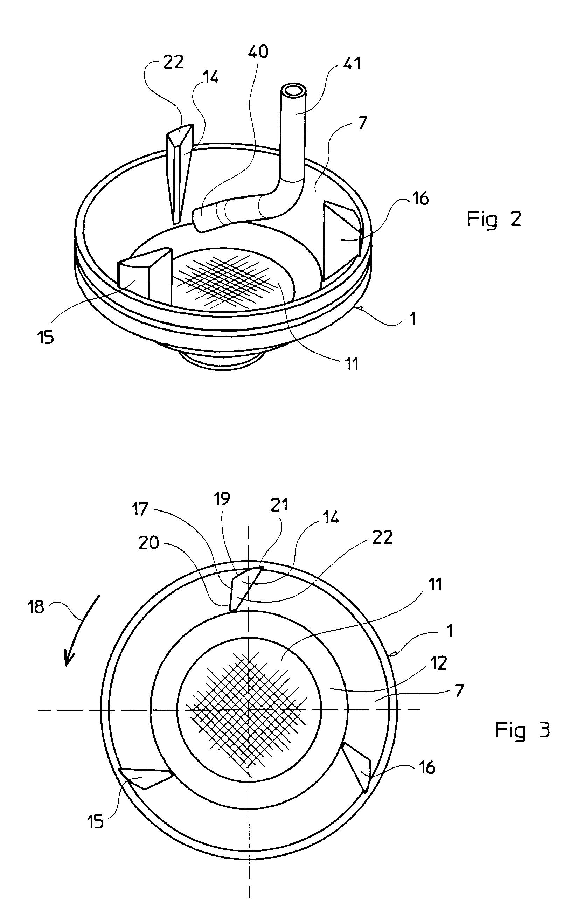

As illustrated in Figure 1 and especially also Figures 2 and 3 the side walls 7 of the brewing chamber carry axially upwardly projecting shovels or wiper blades 14, 15 and 16 shaped with an identical cross section. As illustrated in particular in Figure 3 with reference to the wiper blade 14, this cross section has the effect that each wiper blade comprises a front side 17 facing forwards in the direction in which the brewing chamber 1 can be rotated about its vertical central axis by means of the motor 3. This rotating direction is illustrated by means of an arrow 18 in Figure 3. The front side 17 of the wiper blades comprises two surface parts 19 and 20, of which one outermost surface part 19 extends slightly curved along a plane forming an angle at the outermost edge 21 of the wiper blades of approximately 10 to 30° with a plane being tangent with the brewing chamber 1 at the outermost edge 21 of the wiper blade 14 in question. The second innermost surface part 20 extends from the outermost surface part 19 and radially inwards to the area immediately adjacent the ring 12 along a plane extending substantially perpendicular to the said plane which is tangent to the brewing chamber 1 at the outermost edge 21.

The outermost edges 21 and upper ends 22 of the wiper blades 14, 15, 16 are shaped such that the wiper blades extend to the immediate vicinity of adjacent inner sides of a lid 23 covering the brewing chamber inside the apparatus. The lid 23 comprises a central opening 24 at the top, said opening allowing a feeding of hot water and tea leaves to the interior of the brewing chamber 1. At the inner side, this opening is surrounded by a circumferential groove 25, the side 26 of which adjacent the opening 24 forms a circumferential downward surface in the area radially inside the wiper blades 14, 15 and 16 on the side walls 8 of the brewing chamber 1.

The lid 23 comprises furthermore a circumferential skirt 27 interconnecting the lid and a collecting cup 28 arranged on top of the motor 3. The skirt 27 is provided with a hole 29 for draining off used tea leaves.

The collecting cup 28 is on the inner side provided with a circumferential upwardly projecting pipe stub 30, which extends coaxially about the output axis 4 of the motor 3 and about the hub 2 of the brewing chamber 1 without being in contact with said hub. A skirt 31 is provided on the outer side of the hub 2, said skirt passing downwards about the pipe stub 30 of the collecting cup 28. A sealing device 32 is arranged between the skirt 31 and the pipe stub 30, said sealing device allowing a rotation of the brewing chamber 1 relative to the fixed collecting cup 28 without fluid being able to pass between said pipe stub 30 and the skirt 31. An outlet opening 33 for ready-brewed tea extends from the bottom of the cup 28 at the periphery of said cup.

The upper edge of the collecting cup 28 fits substantially sealingly in the lid 23, said edge and said lid comprising a circumferential projection 34 and a circumferential recess 35, respectively, fitting into one another. The collecting cup 28 comprises furthermore an axially upwardly projecting, circumferential edge 36 placed radially inside an axially downwardly projecting short skirt 37 on the outer side of the brewing chamber 1. On the level in front of this short skirt 37, a further opening 38 is shaped in the lid 23 for draining off used tea leaves which might otherwise penetrate into the space between the skirt 37 and the lid 23.

As indicated in Figure 2, an outlet 40 is provided for a tube 41 for the feeding of hot water to the brewing chamber 1. The tube 41 passes downwards through the opening 24 in the lid 23. The outlet 40 is arranged such that the water flowing out is caused to circulate along the bottom and the adjacent sides in the interior of the brewing chamber 1.

A bracket 42 is provided on the side of the motor for the mounting of the apparatus. The apparatus is preferably mounted in a vending machine provided in a conventionally known manner with devices for delivering hot water, portions of tea leaves on request, as well as devices allowing a collection of ready-brewed tea from the collecting cup 28 through the outlet 33 thereof in a suitable container, such as a cup.

When the apparatus according to the invention is used, the interior of the brewing chamber 1 is supplied with a portion of tea leaves through the opening 24 in the lid 23, while said brewing chamber 1 is not moving. Then hot water is supplied through the tube 41 and the outlet 40 to the brewing chamber 1 at such a rate that the tea leaves are caused to follow the whirling, circulating movement about the central axis of the brewing chamber 1. When the water with the tea leaves calms down, the ready--brewed tea flows downwards through the strainer 11 and down into the collecting cup 28, which the tea leaves through the outlet 33. When all the tea has left the brewing chamber 1, said chamber is caused to rotate at a high speed with the result that the used tea leaves are whirled outwards and upwards over the uppermost edge of said brewing chamber 1 by virtue of the centrifugal force and by means of the wiper blades 14, 15, 16 so as to be expelled through the opening 29 in the lid 23. While the rotation is started, a small amount of additional hot water is simultaneously fed to the brewing chamber 1, whereby an efficient rinsing out of the strainer 11 of tea leaves is obtained. The rotation has the effect that this hot water does not penetrate downwards through the strainer 11 because the water evaporates quickly or is carried away together with the tea leaves. The downward circumferential surface 26 on the inner side of the circumferential groove 25 along the opening 24 of the lid 23 ensures that fluid optionally penetrating to the groove 25 on the inner side of the lid during the expelling procedure immediately falls downwards into the interior of the brewing chamber 1 so as therefrom to be expelled through the opening 29 in the lid 23. After the removal of the used tea leaves, the rotation of the brewing chamber 1 is stopped again and the apparatus is ready for brewing another cup of fresh tea.

The strainer 1 1 is easily replaced by means of the removable ring 12. This ring renders it furthermore possible to adjust the passing time of the tea through the strainer 1 1 to the type of tea in question, because it is possible to use a ring 12 with an upwardly inclining surface 13 and an inner dimension adapted to the type of tea in question.

The hub 2 of the brewing chamber with the circumferential skirt 31 and the fingers 5, 6 as well as the side walls 7 and wiper blades 14, 15 and 16 are suitably cast integral from a plastic material by way of moulding. The wiper blades 14, 15 and 16 can, however, also be manufactured separately and secured by means of suitable means, such as screws.

The invention has been described with reference to a preferred embodiment. Many modifications can be carried out without thereby deviating from the scope of the invention. The strainer 1 1 can for instance be secured directly to the bottom of the brewing chamber 1, and the walls 7 of the brewing chamber 1 can be conically shaped on the inner side all the way down to the outer periphery of the strainer 11, whereby the removable ring 12 can be omitted. The wiper blades 14, 15 and 16 can also have other shapes than the advantageous shape described above.

## Claims

1. A method of making tea in an apparatus comprising a substantially axially symmetrical cup-shaped brewing chamber (1), which is connected to an actuating means (3) causing it to rotate, and which comprises side walls (8, 13) extending obliquely upwards and away from the axis of symmetry, as well as a straining means (11), characterised in that the brewing chamber (1) is supplied with tea leaves and water while it is stopped, said water being fed in a such a direction that it whirls up the tea leaves and causes them to follow a rotating movement about the axis of symmetry, and that the brewed tea is then allowed to ooze downwards through the straining means (11) accommodated at the bottom of the brewing chamber (1) as the water with the tea leaves calms down, and that the tea leaves are then removed from the brewing chamber (1) by said chamber being caused to rotate.

2. A method as claimed in claim 1, characterised in that the removal of the tea leaves is carried out while additional water is added.

3. A method as claimed in claim 1, characterised in that the time which the tea is allowed to infuse inside the brewing chamber (1) is adjusted by the inclination of the side walls (8, 13) being changed across at least a portion thereof.

4. An apparatus for carrying out the method as claimed in claim 1 and comprising a substantially axially symmetrical brewing chamber (1) which is connected to an actuating means (3) for causing it to rotate, and which comprises a straining means (11) and inner side walls (8, 13) extending obliquely upwards and away from the axis of symmetry, characterised in that the straining means (11) is substantially plane and arranged perpendicular to the axis of symmetry, and that the apparatus comprises a water feeding means (41) with an outlet (40) arranged such that the water when added to the brewing chamber is caused to rotate about the axis of symmetry.

5. An apparatus as claimed in claim 4, characterised in that the straining means (11) is in form of a loose disk removably secured in the bottom of the brewing chamber (1) by means of a removable holding ring (12), which extends along the periphery of the straining means (11) and has a surface (13) forming part of the inner side walls (8, 13).

6. An apparatus as claimed in claim 5, characterised in that the inner walls (8, 13)of the brewing chamber carry a plurality of axially upwardly projecting wiper blades (14, 15 and 16) co-operating with the inner side of a covering lid (23) so as to force used tea leaves forwards towards a discharge opening (29) in the lid (23) while the brewing chamber (1) is rotating.

7. An apparatus as claimed in claim 6, characterised in that the front side (17) of the wiper blades (14, 15, 16) when seen in the rotating direction of the brewing chamber comprise two surface parts (19, 20) facing forwards and abutting one another in the rotating direction, where one outermost surface part (19) extends from the outermost edge (21) of the wiper blade (14, 15, 16) substantially along a plane forming an acute angle of from approximately 10 to 30° relative to an axial plane which is tangent to the brewing chamber (1) at the outermost edge (21) of the wiper blade (14, 15, 16), and where the second innermost surface part (20) extends substantially perpendicular to said plane which is tangent to the brewing chamber (1) at the outermost edge (21) of the wiper blade (14, 15, 16), both surface parts extending parallel to the axis of the brewing chamber.

8. An apparatus as claimed in claim 6, characterised in that the outermost surface part (19) of the wiper blades (14, 15, 16) is convex.

9. An apparatus as claimed in claim 6, 7 or 8, characterised in that the lid (23) comprises a circumferntial surface (26) in the area radially inside the wiper blades (14, 15, 16) on the side walls (8, 13) of the brewing chamber (1), said circumferential surface (26) inclining downwards towards the bottom of the brewing chamber (1).
